# EUROPÄISCHE PATENTANMELDUNG

(11) **EP 1 561 550 A1**
(43) Veröffentlichungstag der Anmeldung: **10.08.2005**
(21) Anmeldenummer: 05001705.2
(22) Anmeldetag: 27.01.2005
(51) Int. Cl.: B25J 17/02, B23Q 1/54

(54) **Vorrichtung zur räumlichen Anordnung und Abstützung von einem Arbeitselement zu bzw. an wenigstens einem Basiselement und deren Verwendung**

(30) Priorität: 28.01.2004 DE 102004004313
(71) Anmelder: Guido Kübler GmbH, 86399 Bobingen (DE)
(72) Erfinder: Kübler, Guido, 86399 Bobingen (DE)
(74) Vertreter: Grape & Schwarzensteiner

(57) **Zusammenfassung**

Die Erfindung betrifft eine Vorrichtung zur räumlichen Anordnung und Abstützung von einem Arbeitselement (12) zu bzw. an wenigstens einem Basiselement (14, 14'), umfassend sechs das eine Arbeitselement (12) und das wenigstens eine Basiselement (14, 14') miteinander verbindende Stabelemente (16), deren Enden (18, 18', 18'', 18''', 18'''') jeweils über Kraftübertragungspunkte (20, 20', 20'', 20''', 20'''') an dem zugeordneten einen Arbeitselement (12) und dem zugeordneten wenigstens einen Basiselement (14, 14') abgestützt sind, wobei den sechs Stabelementen (16) wenigstens ein stabförmiges Vorspannelement (22) und/oder ein stabförmiges Versteifungselement (24) zugeordnet ist/sind, das/die zwischen dem einen Arbeitselement (12) und dem wenigstens einen Basiselement (14, 14') eine Vorspannung und/oder eine Aussteifung erzeugt/erzeugen.

## Beschreibung

Die Erfindung betrifft eine Vorrichtung zur räumlichen Anordnung und Abstützung von einem Arbeitselement zu bzw. an wenigstens einem Basiselement und deren Verwendung.

Derartige Vorrichtungen sind allgemein bekannt. So beschreibt die DE 196 40 769 A1 eine Einrichtung, die als Werkzeugmaschine ausgebildet ist. Diese Einrichtung umfasst ein Rahmengestell, an welchem über Verbindungsglieder in Form von Kraftübertragungspunkten insgesamt sechs Einstellvorrichtungen gelagert sind. Die sechs Einstellvorrichtungen sind wiederum über weitere Verbindungsglieder in Form von Kraftübertragungspunkten an einen eine Bewegungseinheit bildenden Basiskörper angekoppelt. Als nachteilig hat sich bei dieser Einrichtung in der Praxis herausgestellt, dass mit diesen insgesamt sechs Einstellvorrichtungen lediglich fünf Freiheitsgrade möglich sind. So lässt sich eine C-Achsstellung nicht erhalten. Des Weiteren sind in der DE 100 11 512 A1 eine Werkzeugmaschine und ein Verfahren zur hochpräzisen räumlichen Anordnung eines Werkzeugs oder Werkstücks unter anderem in sechs Freiheitsgraden mittels einer parallelen Kinematik vorgestellt. Zum Erhalt von sechs Freiheitsgraden sind allerdings insgesamt sieben veränderbare Verbindungselemente zwischen einem Werkzeug- oder Werkstückträger und einem Gestell angeordnet, wovon zwei Verbindungselemente in jedem Fall biegeelastisch ausgebildet sein müssen. Eine solche konstruktive Ausgestaltung gestaltet sich allerdings einerseits verhältnismäßig aufwendig und führt andererseits zu Ungenauigkeiten bezüglich einer räumlichen Anordnung des Werkzeugs oder Werkstücks gegenüber dem Gestell. Auch unterliegen solche biegeweichen Verbindungselemente einem erhöhten Verschleiß und bedürfen nicht zuletzt hieraus resultierend einer ständigen Überwachung und Nachstellung im Betrieb. Sämtliche derartiger Vorrichtungen weisen darüber hinaus in der Praxis den Nachteil auf, dass eine Kraft- und/oder Momentenübertragung in extremen Stellungen nicht, allenfalls nur sehr bedingt möglich ist.

Der Erfindung liegt daher die Aufgabe zugrunde, eine Vorrichtung zur räumlichen Anordnung und Abstützung von einem Arbeitselement zu bzw. an wenigstens einem Basiselement zur Verfügung zu stellen, mit welcher sich die obigen Nachteile verhindern lassen, welche mithin konstruktiv besonders einfach, kompakt und stabil ausgebildet ist und hochpräzise Bewegungen mit sechs Freiheitsgraden und gegebenenfalls unter Vorspannung sowie in beliebigen Stellungen bei einer gleichzeitigen zuverlässigen Kraft- und/oder Momentenübertragung ermöglicht, sowie eine vorteilhafte Verwendung dieser Vorrichtung bereitzustellen.

Diese Aufgabe wird in vorrichtungstechnischer Hinsicht durch die Merkmale des Anspruchs 1 gelöst.

Demnach lässt sich die Ausgestaltung der erfindungsgemäßen Vorrichtung zur räumlichen Anordnung und Abstützung von einem Arbeitselement zu bzw. an wenigstens einem Basiselement, umfassend sechs das eine Arbeitselement und das wenigstens eine Basiselement miteinander verbindende Stabelemente, deren Enden jeweils über Kraftübertragungspunkte an dem zugeordneten einen Arbeitselement und dem zugeordneten wenigstens einen Basiselement abgestützt sind, wobei den sechs Stabelementen wenigstens ein stabförmiges Vorspannelement und/oder ein stabförmiges Versteifungselement zugeordnet ist/sind, das/die zwischen dem einen Arbeitselement und dem wenigstens einen Basiselement eine Vorspannung und/oder eine Aussteifung erzeugt/erzeugen, eine besonders einfache, zudem kompakte Bauweise der Vorrichtung insgesamt erreicht. Darüber hinaus ist diese erfindungsgemäße Vorrichtung in ihrer Bauweise ausgesprochen stabil. Schließlich hat die erfindungsgemäße Vorrichtung den wesentlichen Vorteil, dass sich beliebige Relativbewegungen zwischen dem Arbeitselement und dem wenigstens einen Basiselement vornehmen lassen. Zugleich aber werden ausgleichende Bewegungen durch das wenigstens eine stabförmige Vorspannelement und/oder durch das wenigstens eine stabförmige Versteifungselement aufgenommen und können bei Bedarf beliebig und individuell gedämpft, aktiv gesteuert, vorgespannt, versteift bzw. ausgesteift oder in sonstiger Weise korrigiert werden. Dadurch ist eine exakt vordefinierte Relativbewegung zwischen Arbeitselement und dem wenigstens einen Basiselement ermöglicht. Schließlich ist auch eine kostengünstige Herstellungs- und Betriebsweise der Vorrichtung nach der Erfindung möglich.

Weitere vorteilhafte Einzelheiten der erfindungsgemäßen Vorrichtung sind in den Ansprüchen 2 bis 19 beschrieben.

Von besonderer Bedeutung für eine kontinuierlich aufzubringende Vorspannung sind die Maßnahmen des Anspruchs 2, wonach das wenigstens eine stabförmige Vorspannelement in sämtlichen Stellungen des einen Arbeitselementes und des wenigstens einen Basiselementes relativ zueinander vorspannend wirkt.

Alternativ dazu kann das wenigstens eine stabförmige Vorspannelement noch Anspruch 3 in mindestens einer Stellung des einen Arbeitselementes und des wenigstens einen Basiselementes relativ zueinander vorspannend wirken und in mindestens einer anderen Stellung des einen Arbeitselementes und des wenigstens einen Basiselementes relativ zueinander aussteifend wirken.

Weiterhin sind die Merkmale des Anspruchs 4 für eine kontinuierliche Versteifung bzw. Aussteifung und damit räumliche Anordnung sowie Abstützung des Arbeitselementes zu bzw. an dem wenigstens einen Basiselement von großem Interesse. Danach wirkt das wenigstens eine stabförmige Versteifungselement in sämtlichen Stellungen des einen Arbeitselementes und des wenigstens einen Basiselementes relativ zueinander aussteifend.

In alternativer Ausgestaltung ist es ebenso denkbar, dass das wenigstens eine stabförmige Versteifungselement nach Anspruch 5 in mindestens einer Stellung des einen Arbeitselementes und des wenigstens einen Basiselementes relativ zueinander aussteifend und in mindestens einer anderen Stellung des einen Arbeitselementes und des wenigstens einen Basiselementes relativ zueinander vorspannend wirkt.

Einer einfachen zugleich zuverlässigen Bauweise wie auch einer beliebig und individuell einstellbaren Relativbewegung von Arbeitselement und wenigstens einen Basiselement zueinander, unter Umständen in Echtzeit, dienen die Merkmale des Anspruchs 6, dass nämlich wenigstens ein Stabelement und/oder das wenigstens eine stabförmige Vorspannelement und/oder das wenigstens eine stabförmige Versteifungselement teleskopartig längenverstellbar ist/sind. Dabei sind dessen/deren Enden über die Kraftübertragungselemente unmittelbar an dem Arbeitselement und/oder unmittelbar an dem zugeordneten wenigstens einen Basiselement und/oder an einem anderen Stabelement und/oder an dem wenigstens einen stabförmigen Vorspannelement und/oder an dem wenigstens einen stabförmigen Versteifungselement abgestützt. Durch letztere konstruktive Ausgestaltung lassen sich zusätzlich mögliche Kollisionen oder sonstige Beeinträchtigungen zwischen den Stabelementen, stabförmigen Vorspannelementen bzw. stabförmigen Versteifungselementen untereinander vermeiden, zumindest verringern.

In diesem Zusammenhang ist/sind das wenigstens eine Stabelement und/oder das wenigstens eine stabförmige Vorspannelement und/oder das wenigstens eine stabförmige Versteifungselement nach Anspruch 7 vorzugsweise durch aktive Steuerung oder Regelung teleskopartig längenverstellbar.

Alternativ oder kumulativ dazu liegt es weiterhin im Rahmen der Erfindung, dass das wenigstens eine Stabelement und/oder das wenigstens eine stabförmige Vorspannelement und/oder das wenigstens eine stabförmige Versteifungselement nach Anspruch 8 konstante Länge aufweist/aufweisen, wobei mindestens ein Ende des wenigstens einen Stabelementes und/oder des wenigstens einen stabförmigen Vorspannelementes und/oder des wenigstens einen stabförmigen Versteifungselementes über einen Kraftübertragungspunkt unter Zwischenanordnung eines Längeneinstellungselementes an dem Arbeitselement und/oder dem zugeordneten wenigstens einen Basiselement abgestützt ist.

Nach Anspruch 9 ist dabei erfindungsgemäß vorgesehen, dass das wenigstens eine Basiselement gegenüber dem Arbeitselement relativ in einer Ebene, beispielsweise über eine Schienenanordnung, Kulissenanordnung oder Scherenkinematik, linear bewegbar ist.

In diesem Zusammenhang liegt es im Rahmen der Erfindung, die Kraftübertragungspunkte entsprechend den Merkmalen des Anspruchs 10 als Drehachse, Kugelgelenk, Kardangelenk oder Kulissenführungselement auszubilden. Dabei kann das Kardangelenk mit oder ohne Drehscheibe oder dergleichen Drehelement versehen sein.

Um noch größere (Bewegungs-)Freiheiten zu schaffen, ist es kumulativ oder alternativ nach Anspruch 11 vorgesehen, dass wenigstens ein Kraftübertragungspunkt, d.h. ein oder mehrere der Gelenke selbst, aktiv steuer- und/oder regelbar ausgebildet ist/sind.

Zu diesem Zweck kann/können der/die Kraftübertragungspunkt/e gemäß den Maßnahmen des Anspruchs 12 in vorteilhafter Weise als Servomotor, High-Torque-Motor, Hydraulikdrehmotor oder dergleichen Bewegungsenrichtung ausgebildet sein, um entsprechend jeweiligem Freiheitsgrad des Gelenkes an einer oder mehreren Stellen definierte Positionen des/der Stabelemente/e, stabförmigen Vorspannelemente/s und/oder stabförmigen Versteifungselemente/s zu erreichen und damit eine Vorspannung und/oder Aussteifung zu erzeugen.

Entsprechend den Merkmalen des Anspruchs 13 sind die Kraftübertragungspunkte in vorteilhafter Weise jeweils an dem zugeordneten Arbeitselement und/oder dem zugeordneten wenigstens einen Basiselement in einer Ebene angeordnet.

In alternativer Ausgestaltung dazu können die Kraftübertragungspunkte nach Anspruch 14 darüber hinaus auch jeweils an dem zugeordneten Arbeitselement und/oder dem zugeordneten wenigstens einen Basiselement in verschiedenen Ebenen angeordnet sein.

Weiterhin liegt es im Rahmen der Erfindung, das wenigstens eine Stabelement und/oder das wenigstens eine stabförmige Vorspannelement und/oder das wenigstens eine stabförmige Versteifungselement und/oder das Längeneinstellungselement nach Anspruch 15 hydraulisch, pneumatisch, mechanisch oder elektrisch betätigen zu können. Deren individuelle Steuerung bzw. unter Umständen vorgesehene Regelung lässt sich schnell, d.h. weitgehend in Echtzeit, und ohne zusätzlichen konstruktiven Aufwand sowie mit hoher Zuverlässigkeit vornehmen.

In diesem Zusammenhang umfasst das wenigstens eine Stabelement und/oder das wenigstens eine stabförmige Vorspannelement und/oder das wenigstens eine stabförmige Versteifungselement und/oder das Längeneinstellungselement nach Anspruch 16 zweckmäßigerweise eine Hydraulikeinheit, Pneumatikeinheit, Lineareinheit, Spindeleinheit, einen Linearmotor oder dergleichen. Durch eine Hydraulikeinheit, wie einen Hydraulikzylinder beispielsweise, erfolgt die Ansteuerung durch entsprechenden Druckaufbau in zwei einander gegenüberliegenden Kammern, deren Verstellung durch einen Wegmesssystem kontrollierbar ist. Es lässt sich eine definierte Position des wenigstens einen Stabelementes und/oder des wenigstens einen stabförmigen Vorspannelementes und/oder des wenigstens einen stabförmigen Versteifungselementes und/oder des Längeneinstellungselementes erhalten.

Von besonderem Interesse für eine einfache, unter Umständen zentrale und genau bestimmbare Steuerung der erfindungsgemäßen Vorrichtung sind die konstruktiven Maßnahmen der Ansprüche 17 und 18, wonach das wenigstens eine Stabelement und/oder das wenigstens eine stabförmige Vorspannelement und/oder das wenigstens eine stabförmige Versteifungselement und/oder das Längeneinstellungselement zu deren Steuerung bzw. Regelung kommunizieren, und zwar entweder jeweils individuell oder sämtlich gemeinsam aufeinander abgestimmt.

Vorzugsweise umfasst das Arbeitselement entsprechend Anspruch 19 einen Werkzeug- und/oder Werkstückträger zur Aufnahme und lösbaren Halterung eines Werkzeuges und/oder Werkstücks.

Schließlich liegt es noch im Rahmen der Erfindung entsprechend Anspruch 20, eine Vorrichtung gemäß der Erfindung zur räumlichen Anordnung und Abstützung von einem Arbeitselement zu bzw. an wenigstens einem Basiselement zu verwenden, bei welchem das Arbeitselement Bestandteil einer Hexapod-Anordnung oder einer Linapod-Anordnung ist.

Weitere Merkmale, Vorteile und Einzelheiten der Erfindung ergeben sich aus der nachfolgenden Beschreibung einiger bevorzugter Ausführungsformen der Erfindung sowie anhand der Zeichnungen. Hierbei zeigen:
- Fig. 1A und 1B: schematische Ansichten einer herkömmlichen Vorrichtung zur räumlichen Anordnung und Abstützung von einem Arbeitselement zu bzw. an wenigstens einem Basiselement mit sechs das eine Arbeitselement und das wenigstens eine Basiselement miteinander verbindenden Stabelementen, in einer Ausgangsstellung und in einer Arbeitsstellung,
- Fig. 2A und 2B: schematische Ansichten einer ersten Ausführungsform einer erfindungsgemäß ausgebildeten Vorrichtung zur räumlichen Anordnung und Abstützung von einem Arbeitselement zu bzw. an wenigstens einem Basiselement, in einer Ausgangsstellung und in einer Arbeitsstellung,
- Fig. 3A und 3B: schematische Ansichten einer weiteren Ausführungsform einer erfindungsgemäß ausgebildeten Vorrichtung, in einer Ausgangsstellung und in einer Arbeitsstellung,
- Fig. 4A und 4B: schematische Ansichten einer noch weiteren Ausführungsform einer erfindungsgemäß ausgebildeten Vorrichtung, in einer Ausgangsstellung und in einer Arbeitsstellung,
- Fig. 5A und 5B: schematische Ansichten einer anderen Ausführungsform einer erfindungsgemäß ausgebildeten Vorrichtung, in einer Ausgangsstellung und in einer Arbeitsstellung,
- Fig. 6A und 6B: schematische Ansichten einer noch anderen Ausführungsform einer erfindungsgemäß ausgebildeten Vorrichtung, in einer Ausgangsstellung und in einer Arbeitsstellung,
- Fig. 7A und 7B: schematische Ansichten einer abermals anderen Ausführungsform einer erfindungsgemäß ausgebildeten Vorrichtung, in einer Ausgangsstellung und in einer Arbeitsstellung,
- Fig. 8A und 8B: schematische Ansichten einer wiederum abgewandelten Ausführungsform einer erfindungsgemäß ausgebildeten Vorrichtung, in einer Ausgangsstellung und in einer Arbeitsstellung,
- Fig. 9A und 9B: schematische Ansichten einer weiteren Ausführungsform einer erfindungsgemäß ausgebildeten Vorrichtung, in einer Ausgangsstellung und in einer Arbeitsstellung,
- Fig. 10A und 10B: schematische Ansichten einer abgeänderten Ausführungsform einer erfindungsgemäß ausgebildeten Vorrichtung, in einer Ausgangsstellung und in einer Arbeitsstellung,
- Fig. 11A und 11B: schematische Ansichten einer andersartigen Ausführungsform einer erfindungsgemäß ausgebildeten Vorrichtung, in einer Ausgangsstellung und in einer Arbeitsstellung,
- Fig. 12A und 12B: schematische Ansichten einer noch anderen Ausführungsform einer erfindungsgemäß ausgebildeten Vorrichtung, in einer Ausgangsstellung und in einer Arbeitsstellung,
- Fig. 13A und 13B: schematische Ansichten einer weiteren Ausführungsform einer erfindungsgemäß ausgebildeten Vorrichtung, in einer Ausgangsstellung und in einer Arbeitsstellung,
- Fig. 14A und 14B: schematische Ansichten einer nochmals andersgearteten Ausführungsform einer erfindungsgemäß ausgebildeten Vorrichtung, in einer Ausgangsstellung und in einer Arbeitsstellung, und
- Fig. 15: eine teilweise abgebrochene Ansicht einer Ausführungsform eines erfindungsgemäßen Kraftübertragungspunktes, in vergrößerter Darstellung.

Die erfindungsgemäße Vorrichtung 10 ist zur räumlichen Anordnung und Abstützung von einem Arbeitselement 12 zu bzw. an wenigstens einem Basiselement 14 vorgesehen. Bei der nachfolgenden Beschreibung von verschiedenen Ausführungsbeispielen der erfindungsgemäßen Vorrichtung 10 sind einander entsprechende, gleiche Bauteile jeweils mit identischen Bezugsziffern versehen.

Die Vorrichtung 10 nach der Erfindung eignet sich insbesondere zur räumlichen Anordnung und Abstützung von einem Arbeitselement 12 zu bzw. an wenigstens einem Basiselement 14 einer Hexapod-Anordnung oder einer Linapod-Anordnung, für zum Beispiel Werkzeugmaschinen bzw. Werkzeughalter zur Fertigung, Handhabung, Manipulierung oder Messung etc.

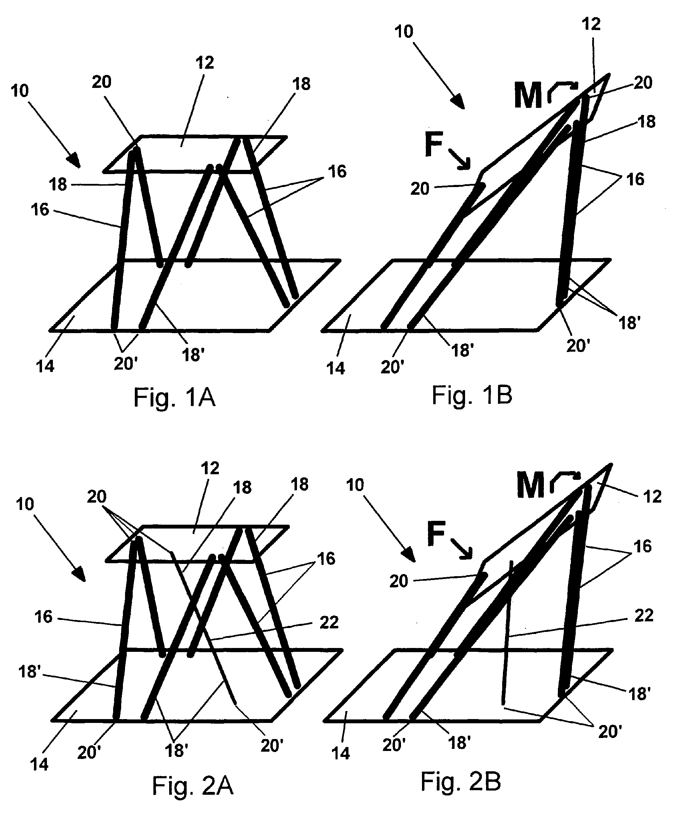

In den Fig. 1A und 1B ist eine an sich bekannte Vorrichtung schematisch dargestellt. Die Vorrichtung 10 weist dabei ein Arbeitselement 12 und ein Basiselement 14 auf. Arbeitselement 12 und Basiselement 14 sind über insgesamt sechs Stabelemente 16 miteinander verbunden. Die Enden 18 der Stabelemente 16 sind jeweils über Kraftübertragungspunkte 20 an dem zugeordneten einen Arbeitselement 12 abgestützt. Demgegenüber sind die Enden 18' der Stabelemente 16 jeweils über Kraftübertragungspunkte 20' von dem zugeordneten wenigstens einen Basiselement 14 aufgenommen und gelagert.

Die in den Fig. 1A und 1B dargestellte bekannte Vorrichtung 10 mit insgesamt sechs Stabelementen besitzt sechs Freiheitsgrade. Eine Vorspannung zur räumlichen Anordnung und Abstützung des Arbeitselementes 12 zu bzw. an dem wenigstens einen Basiselement 14 ist weder vorgesehen noch möglich. Damit einhergehend lässt sich eine Kraft- und/oder Momentenübertragung nicht, zumindest nur ganz bedingt erreichen. In der Fig. 1B ist beispielhaft eine Arbeitsstellung der bekannten Vorrichtung gezeigt, in welcher weder Kräfte F noch Momente M aufgenommen werden können. Die bekannte Vorrichtung 10 lässt sich daher in der Praxis nicht in eine solche Arbeitsstellung verbringen, ohne eine Instabilität und damit die Gefahr einer Verletzung von Bedienungspersonal hervorzurufen.

In den Fig. 2A und 2B ist nun eine erste Ausführungsform einer solchen Vorrichtung 10 nach der Erfindung schematisch dargestellt. Die Vorrichtung 10 weist dabei ebenfalls ein Arbeitselement 12 und ein Basiselement 14 auf. Das Arbeitselement 12 und das Basiselement 14 sind wiederum über sechs Stabelemente 16 miteinander verbunden. Die Enden 18 der Stabelemente 16 sind jeweils über Kraftübertragungspunkte 20 von dem zugeordneten einen Arbeitselement 12 aufgenommen und gehalten. Die Enden 18' der Stabelemente 16 sind hingegen jeweils über Kraftübertragungspunkte 20' an dem zugeordneten wenigstens einen Basiselement 14 abgestützt.

Weiterhin umfasst die Vorrichtung 10 nach der Erfindung entsprechend den Fig. 2A und 2B zusätzlich ein stabförmiges Vorspannelement 22. Das stabförmige Vorspannelement 22 ist den sechs Stabelementen 16 zugeordnet. Dessen eines Ende 18 ist wiederum über einen Kraftübertragungspunkt 20 an dem zugeordneten Arbeitselement 12 angebracht. Dessen anderes Ende 18' ist über einen Kraftübertragungspunkt 20' an dem zugeordneten wenigstens einen Basiselement 14 abgestützt.

Insoweit ist die in den Fig. 2A und 2B gezeigte Ausführungsform einer erfindungsgemäßen Vorrichtung 10 mit einem zusätzlichen stabförmigen Vorspannelement 22 ausgestattet. Auf diese Weise ist zwischen dem Arbeitselement 12 und dem Basiselement 14 der Vorrichtung 10 in der Ausgangsstellung, die in der Fig. 2A gezeigt ist, eine Vorspannung vorhanden. In einer Übergangsstellung zwischen der Ausgangsstellung und der Arbeitsstellung der Vorrichtung 10 (nicht dargestellt) wird die Vorspannung allerdings vermindert. In gleichem Maße aber lässt sich durch das stabförmige Vorspannelement 22 eine Versteifung bzw. Aussteifung des Arbeitselementes 12 gegenüber dem Basiselement 14 in der Arbeitsstellung, die in der Fig. 2B gezeigt ist, erreichen.

Mithin dient das stabförmige Vorspannelement 22 in der Ausgangsstellung gemäß der Fig. 2A der Aufbringung einer Vorspannung und übernimmt in der Arbeitsstellung gemäß der Fig. 2B die Funktion einer Versteifung bzw. Aussteifung.

Ohne im Einzelnen dargestellt zu sein, ist es jedoch ebenso denkbar, das wenigstens eine stabförmige Vorspannelement 22 in weiteren oder sogar in sämtlichen Stellungen des einen Arbeitselementes 12 und des wenigstens einen Basiselementes 14 relativ zueinander vorspannend wirken zu lassen.

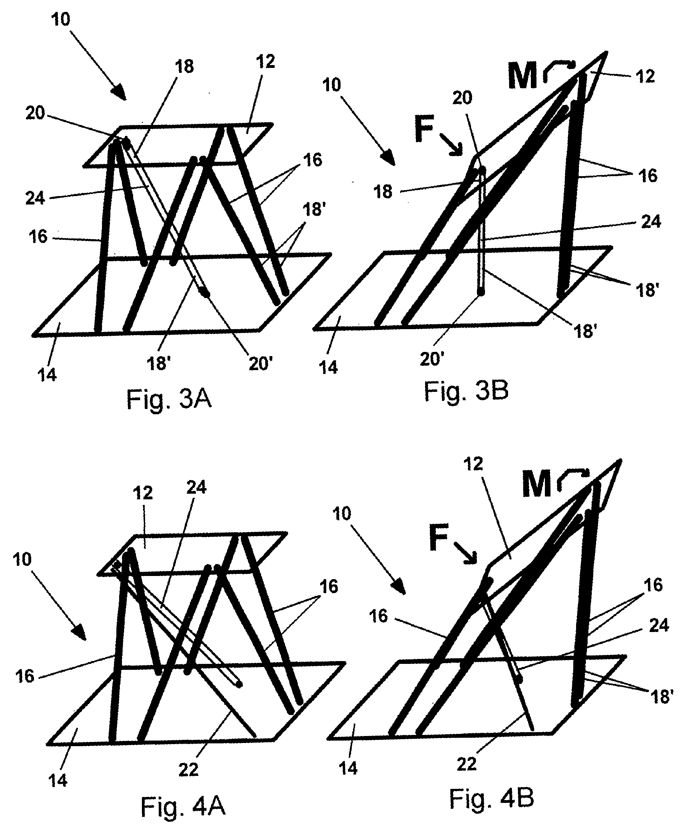

Bei der Ausführungsform der Vorrichtung 10 nach der Erfindung, die in den Fig. 3A und 3B dargestellt ist, ist neben den sechs Stabelementen zwischen dem Arbeitselement 12 und dem wenigstens einen Basiselement 14 ein zusätzliches stabförmiges Versteifungselement 24 angeordnet. Das stabförmige Versteifungselement 24 ist mit dem einen Ende 18 über einen Kraftübertragungspunkt 20 an dem zugeordneten einen Arbeitselement 12 und mit dem anderen Ende 18' über einen Kraftübertragungspunkt 20' an dem zugeordneten wenigstens einen Basiselement 14 gelagert.

Die erfindungsgemäße Vorrichtung 10 ist in der Ausgangsstellung, die in der Fig. 3A gezeigt ist, bereits hinreichend stabil ausgebildet. Durch die Anordnung des zusätzlichen stabförmigen Versteifungselementes 22 erhält die Vorrichtung 10 auch in der Arbeitsstellung, die in der Fig. 3B gezeigt ist, eine weitergehende Versteifung bzw. Aussteifung. Die Vorrichtung 10 nach der Erfindung erhält somit auch in der Arbeitsstellung eine weitaus höhere Stabilität, mit der Folge, dass größere Kräfte F und Momente M insgesamt aufgenommen werden können. Das wenigstens eine stabförmige Versteifungselement 24 wirkt somit in mehreren oder sogar in sämtlichen Stellungen des einen Arbeitselementes 12 und des wenigstens einen Basiselementes 14 relativ zueinander aussteifend bzw. versteifend.

Gegebenenfalls kann das Versteifungselement 24 dabei in der Ausgangsstellung, die in der Fig. 3A gezeigt ist, auch durchaus vorspannend zwischen dem Arbeitselement 12 und dem Basiselement 14 wirken.

In den Fig. 4A und 4B ist eine weitere Ausführungsform der erfindungsgemäßen Vorrichtung 10 dargestellt. Bei dieser Ausführungsform der Vorrichtung 10 sind neben den sechs Stabelementen 16 sowohl ein stabförmiges Vorspannelement 22 als auch ein stabförmiges Versteifungselement 24 vorgesehen. Die Vorrichtung 10 lässt sich somit auch in der Arbeitsstellung, die in der Fig. 4B dargestellt ist, unter Vorspannung setzen.

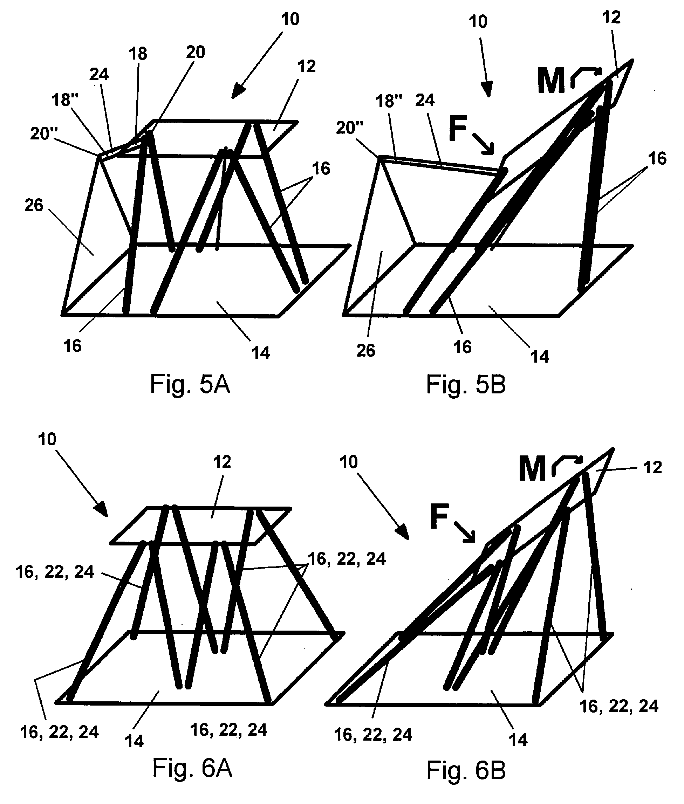

Die Ausführungsform der erfindungsgemäßen Vorrichtung 10 nach den Fig. 5A und 5B stimmt im Wesentlichen mit der zuvor erläuterten Ausführungsform der Vorrichtung 10 nach den Fig. 4A und 4B überein.

Während allerdings bei der Ausführungsform der erfindungsgemäßen Vorrichtung 10 nach den Fig. 4A und 4B, wie im Übrigen auch bei den weiteren zuvor beschriebenen Ausführungsformen nach den Fig. 1A bis 3B auch, die Kraftübertragungspunkte 20 der Stabelemente 16, des/der stabförmigen Vorspannelemente/s und des/der stabförmigen Versteifungselemente/s 24 jeweils an dem zugeordneten Arbeitselement 12 bzw. dem zugeordneten wenigstens einen Basiselement 14 in einer Ebene liegen, sind die Kraftübertragungspunkte 20 bei der Ausführungsform der Vorrichtung 10 nach den Fig. 5A und 5B in verschiedenen Ebenen angeordnet. So ist das eine Ende 18 des stabförmigen Versteifungselementes 24 über den Kraftübertragungspunkt 20 an dem zugeordneten einen Arbeitselement 12 angebracht. Das andere Ende 18'' hingegen ist beispielsweise über den Kraftübertragungspunkt 20'' an einem Vorsprung 26 oder dergleichen hervorstehenden Elementes des Basiselementes 14 angebracht.

Ohne im Einzelnen dargestellt zu sein, ist es jedoch ebenso möglich, den Vorsprung 26 oder dergleichen hervorstehenden Element nicht integral an dem Basiselement 14, sondern von diesem gesondert anzuordnen.

Bei der Ausführungsform der Vorrichtung 10 nach der Erfindung, die in den Fig. 6A und 6B dargestellt ist, sind zwischen dem Arbeitselement 12 und dem Basiselement 14 sechs Stabelemente 16 und zusätzlich jeweils ein stabförmiges Vorspannelement 22 und ein stabförmiges Versteifungselement 24 angeordnet.

Die Ausführungsform der Vorrichtung 10 nach den Fig. 6A und 6B unterscheidet sich von den beiden vorhergehenden Ausführungsformen der erfindungsgemäßen Vorrichtung 10 nach den Fig. 4A und 4B bzw. 5A und 5B lediglich dadurch, dass jedes der sechs Stabelemente 16 wie auch das stabförmige Vorspannelement 22 und das stabförmige Versteifungselement 24 in der Lage sind, in einer Stellung die Funktion einer Vorspannung und in einer anderen Stellung die Funktion einer Versteifung bzw. Aussteifung und damit Abstützung zu übernehmen.

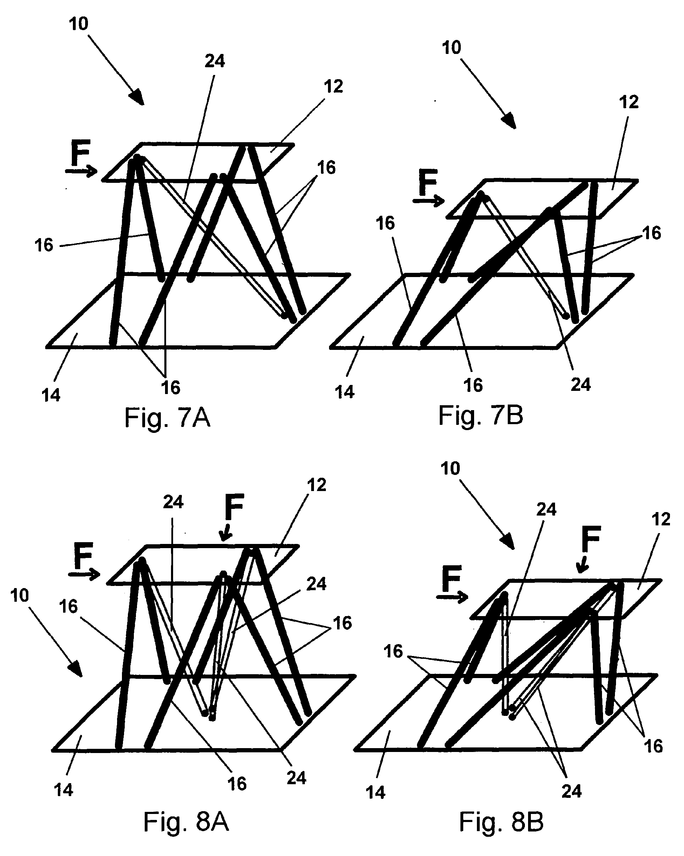

Bei der noch anderen Ausführungsform der Vorrichtung 10, die aus den Fig. 7A und 7B hervorgeht, ist die Versteifung bzw. Aussteifung entgegen der Richtung der auftretenden Kraft F mittels eines zusätzlichen stabförmigen Versteifungselementes 24 erhöht. Auf diese Weise erhält die Vorrichtung 10 sowohl in der Ausgangsstellung, die in der Fig. 7A dargestellt ist, als auch in der Arbeitsstellung, die in der Fig. 7B gezeigt ist, eine größere Stabilität. Das stabförmige Versteifungselement 24 wirkt insofern in sämtlichen Stellungen des einen Arbeitselementes 12 und des wenigstens einen Basiselementes 14 relativ zueinander aussteifend.

Die Ausführungsform der erfindungsgemäßen Vorrichtung 10, die sich den Fig. 8A und 8B entnehmen lässt, stimmt im Wesentlichen mit der Ausführungsform der Fig. 7A und 7B überein. Um lediglich Kräfte F aus verschiedenen Richtungen sowohl in der Ausgangsstellung, die in der Fig. 8A dargestellt ist, als auch in der Arbeitsstellung, die in der Fig. 8B gezeigt ist, sicher aufnehmen zu können, sind neben den sechs Stabelementen 16 insgesamt drei zusätzliche stabförmige Versteifungselemente 24 vorhanden. Insoweit besitzt die Ausführungsform der erfindungsgemäßen Vorrichtung 10, die in den Fig. 8A und 8B vorgestellt ist, insgesamt neun Stabelemente 16 bzw. stabförmige Versteifungselemente 24.

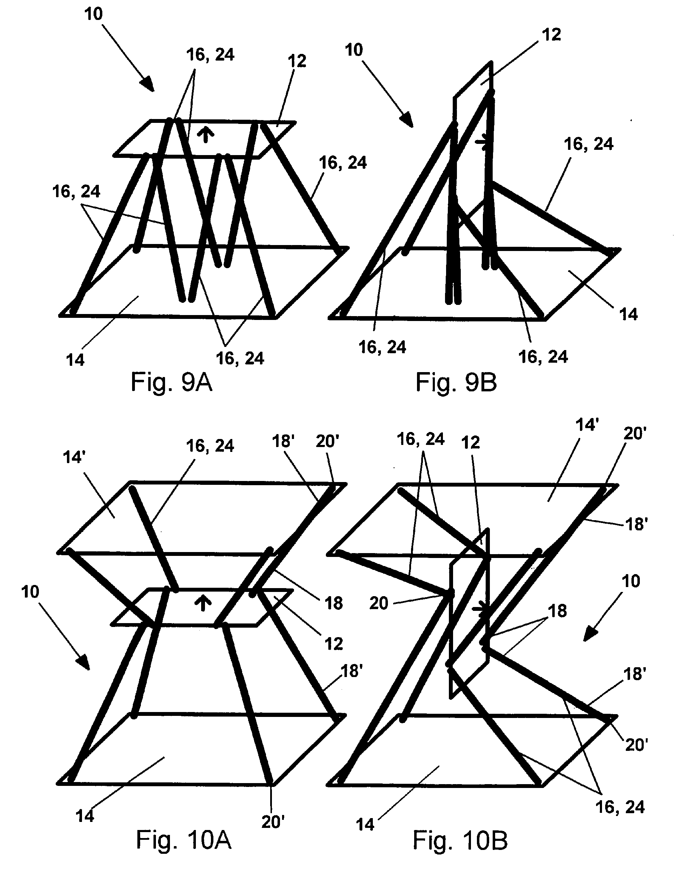

Um weiterhin größere Bewegungsfreiheiten zwischen dem Arbeitselement 12 und dem wenigstens einen Basiselement 14 zu ermöglichen, sind bei der Ausführungsform der Vorrichtung 10 nach der Erfindung, die in den Fig. 9A und 9B gezeigt sind, ebenfalls neben sechs Stabelementen 16 zusätzliche stabförmige Versteifungselemente 24 vorgesehen. Die sechs Stabelemente 16 und die beiden zusätzlichen stabförmigen Versteifungselemente 24 ergänzen sich wiederum in ihrer Funktion, stellen zugleich sicher, dass das Arbeitselement 12 um bis zu 360° oder mehr aus der Ausgangsstellung, die in der Fig. 9A gezeigt ist, in eine Arbeitsstellung, die in der Fig. 9B gezeigt ist, und weiter verschwenkt werden kann. Ungeachtet dessen befindet sich das Arbeitselement 12, wie in der Fig. 9B dargestellt ist, jedoch gerade in einer Arbeitsstellung, die von der Ausgangsstellung lediglich etwa um 90° abweicht. Auf diese Weise lässt sich eine undefinierte Stellung, in welcher das Arbeitselement 12 und mindestens ein Stabelement 16 bei Verwendung von lediglich sechs Stabelementen 16 angeordnet werden, verhindern.

Die Fig. 10A und 10B zeigen eine noch andere Ausführungsform der erfindungsgemäßen Vorrichtung 10. Demnach ist das Arbeitselement 12 sandwichartig zwischen einem unteren Basiselement 14 und einem oberen Basiselement 14' zwischengeordnet. Das Arbeitselement 12 ist dabei zwischen diesen beiden Basiselementen 14, 14' durch insgesamt sechs Stabelemente 16 und zwei zusätzliche stabförmige Versteifungselemente 24 räumlich angeordnet und abgestützt. Die Stabelemente 16 und die zwei stabförmigen Versteifungselemente 24 übernehmen jeweils die Funktion einer Versteifung bzw. Aussteifung. Entsprechend den Fig. 10A und 10B sind die sechs Stabelemente 16 und die zwei stabförmigen Versteifungselemente 24 in unterschiedlichen Ebenen angeordnet.

Bei den Ausführungsformen der Vorrichtung 10 nach den Fig. 1A bis 10B sind die Stabelemente 16, die stabförmigen Vorspannelemente 22 und stabförmigen Versteifungselemente 24 vorzugsweise jeweils teleskopartig längenverstellbar, wobei deren Enden 18, 18', 18'' über die Kraftübertragungspunkte 20, 20', 20'' unmittelbar an dem Arbeitselement 12 bzw. dem/den zugeordneten Basiselementen 14, 14' abgestützt sind. Dabei kann die teleskopartige Längenverstellbarkeit durch aktive Steuerung oder Regelung erfolgen.

Alternativ oder kumulativ dazu ist es jedoch ebenso denkbar, dass ein oder mehrere Stabelemente 16, stabförmige Vorspannelemente 22 und/oder stabförmige Versteifungselemente 24 konstante Länge aufweisen, sodann aber mindestens ein Ende des jeweiligen Stabelementes 16, stabförmigen Vorspannelementes 22 und/oder stabförmigen Versteifungselementes 24 über einen Kraftübertragungspunkt 20, 20', 20'' unter Zwischenanordnung eines Längeneinstellelementes (nicht gezeigt) an dem Arbeitselement 12 und dem/den Basiselement/en 14, 14' abgestützt ist.

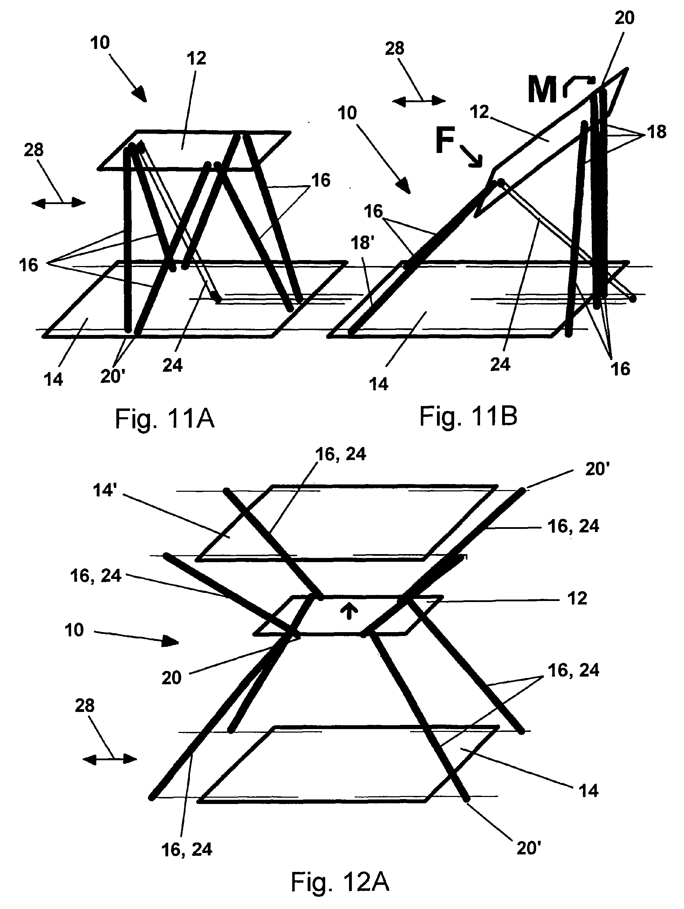

In alternativer Ausgestaltung eines solchen nicht dargestellten Längeneinstellungselementes wird die Längenverstellbarkeit des/der Stabelemente/s 16, stabförmigen Vorspannelemente/s 22 und stabförmigen Versteifungselemente/s 24 bei der Ausführungsform der erfindungsgemäßen Vorrichtung 10 nach den Fig. 11A und 11B auf noch andere Weise gelöst. Demnach ist das wenigstens eine Basiselement 14 gegenüber dem Arbeitselement 12 relativ in einer Ebene gemäß Doppelpfeil 28 linear bewegbar. Hierdurch ist eine Bewegung von einer Stellung in eine andere mittels längenkonstanten Stabelementen 16, stabförmigen Vorspannelementen 22 und/oder stabförmigen Versteifungselementen 24 bei gleichzeitiger Veränderung von bestimmten Fußpunkten erreicht.

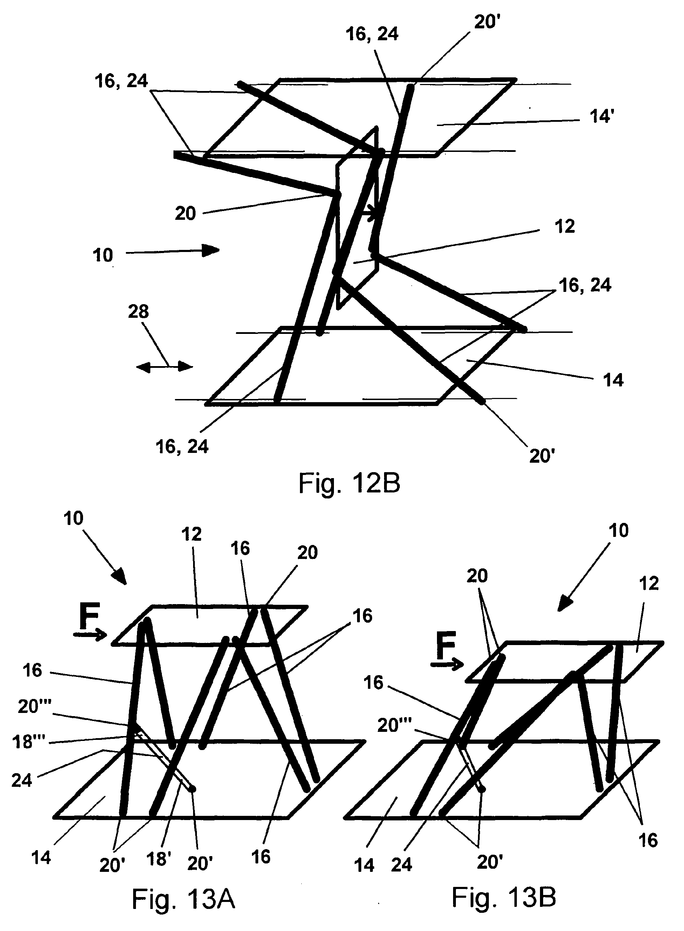

Die Ausführungsform der erfindungsgemäßen Vorrichtung 10, die in den Fig. 12A und 12B gezeigt ist, stellt darüber hinaus eine Kombination der beiden Ausführungsformen gemäß den Fig. 10A und 10B bzw. 11A und 11B dar. Demnach ist das Arbeitselement 12 wiederum zwischen einem unteren Basiselement 14 und einem oberen Basiselement 14' angeordnet und über sechs Stabelemente 16 sowie zwei zusätzliche stabförmige Versteifungselemente 24 im Raum angeordnet und abgestützt. Diese sind jedoch wiederum längenkonstant. Eine Bewegung von einer Stellung in eine andere findet jedoch wiederum durch eine lineare Bewegung des/der Basiselemente/s 14, 14' gegenüber dem Arbeitselement 12 relativ in einer Ebene statt.

In den Fig. 13A und 13B ist eine noch andere Ausführungsform einer Vorrichtung 10 nach der Erfindung beschrieben. Demnach ist ein stabförmiges Versteifungselement 24 mit einem Ende 18' über den Kraftübertragungspunkt 20' an dem Basiselement 14 angeordnet und mit dem anderem Ende 18''' über den Kraftübertragungspunkt 20''' mit einem der Stabelemente 16 verbunden. Das stabförmige Versteifungselement 24 kann dabei von gleicher oder unterschiedlicher Länge und/oder teleskopierbar oder nicht sein. Mittels einer solchen Bauweise lassen sich zusätzlich mögliche Kollisionen oder sonstige Beeinträchtigungen zwischen den Stabelementen, stabförmigen Vorspannelementen bzw. stabförmigen Versteifungselementen untereinander vermeiden oder zumindest verringern.

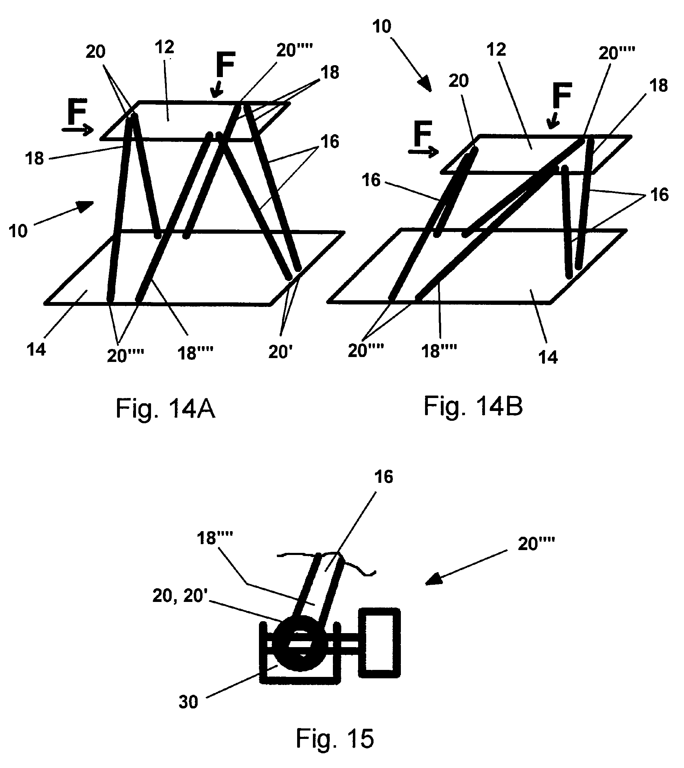

Ohne im Einzelnen dargestellt zu sein, ist es gleichermaßen möglich, entsprechend dem jeweiligen Anforderungsprofil anstelle des stabförmigen Versteifungselementes 24 ein anderes Stabelement 16 oder auch ein stabförmiges Vorspannelement 22 zu verwenden. Auch ist es denkbar, mehrere solcher Stabelemente 16, stabförmigen Vorspannelemente 22 bzw. stabförmigen Versteifungselemente 24 mit einem Kraftübertragungspunkt 20''' auszustatten, um eine Vorspannung und/oder Versteifung bzw. Aussteifung über das zugeordnete Arbeitselement 12 (nicht gezeigt) oder Basiselement 14, 14' (ebenfalls nicht gezeigt) zu erzeugen.
Schließlich ist in den Fig. 14A, 14B und 15 noch ein weiteres Ausführungsbeispiel einer erfindungsgemäßen Vorrichtung 10 dargestellt. Zur Schaffung von noch größeren (Bewegungs-)Freiheiten ist/sind bei diesem Ausführungsbeispiel ein oder mehrere, gegebnenfalls sämtliche, Kraftübertragungspunkt/e 20'''' an dem jeweils zugeordneten Ende 18'''' des Stabelementes 16, stabförmigen Vorspannelementes 22 bzw. stabförmigen Versteifungselementes 24, d.h. ein oder mehrere der Gelenke selbst, aktiv steuer- und/oder regelbar ausgebildet.

Dabei kann/können der/die Kraftübertragungspunkt/e 20'''' zweckdienlicherweise als Servomotor 30, wie in der Fig. 15 dargestellt ist, High-Torque-Motor, Hydraulikdrehmotor oder dergleichen Bewegungsenrichtung ausgebildet sein, um entsprechend jeweiligem Freiheitsgrad des Gelenkes (Freiheitsgrad 2 oder 3) an einer oder mehreren Stellen definierte Positionen des/der Stabelemente/e, stabförmigen Vorspannelemente/s und/oder stabförmigen Versteifungselemente/s zu erreichen und damit eine Vorspannung und/oder Aussteifung zu erzeugen.

Ohne im Einzelnen dargestellt zu sein, können die Kraftübertragungspunkte 20, 20', 20'', 20''' als Drehachse, Kugelgelenk, Kardangelenk mit oder ohne Drehscheibe oder dergleichen Drehelement, oder Kulissenführungselement ausgebildet sein.

Die Kraftübertragungspunkte 20, 20', 20'', 20''', 20'''' selbst einer Ausführungsform einer Vorrichtung 10 nach der Erfindung können dabei zudem zueinander unterschiedlich ausgestaltet sein.

Weiterhin sind das/die Stabelement/e 16, stabförmige/n Vorspannelement/e 22, stabförmige/n Versteifungselement/e und/oder Längeneinstellungselement/e und/oder der/die Kraftübertragungspunkt/e 20'''' hydraulisch, pneumatisch, mechanisch oder elektrisch längenverstellbar sein. Zu diesem Zweck umfasst das jeweilige Element vorzugsweise eine Hydraulikeinheit, Pneumatikeinheit, Lineareinheit, Spindeleinheit oder einen Linearmotor. Deren Steuerung bzw. Regelung wird zudem von einer Steuereinrichtung vorgenommen, wobei die Elemente jeweils individuell oder sämtlich gemeinsam aufeinander abgestimmt einstellbar sind.

Die erfindungsgemäße Vorrichtung 10 ist nicht auf die vorhergehenden Ausführungsbeispiele beschränkt. So ist es ohne weiteres möglich, die oben vorgestellten Ausführungsformen der erfindungsgemäßen Vorrichtung 10 mit den jeweiligen technischen Merkmalen beliebig mit- und untereinander zu kombinieren. Schließlich ist es ebenso noch denkbar, dass das Arbeitselement 12 einen Werkzeug- und/oder Werkstückträger (nicht gezeigt) zur Aufnahme und lösbaren Halterung eines Werkzeugs und/oder Werkstücks (ebenfalls nicht dargestellt) umfasst. Auf diese Weise lassen sich Werkzeuge und/oder Werkstücke beliebiger Art bzw. beliebiger Bestimmung bewegen, herstellen, bearbeiten und in sonstiger Weise verarbeiten.

### Bezugszeichenliste

- 10: Vorrichtung
- 12: Arbeitselement
- 14, 14': Basiselement
- 16: Stabelement
- 18, 18', 18'', 18''', 18'''': Enden des Stabelementes
- 20, 20', 20'', 20''', 20'''': Kraftübertragungspunkte
- 22: Vorspannungselement
- 24: Versteifungselement
- 26: Vorsprung
- 28: Doppelpfeil
- 30: Servomotor.

## Patentansprüche

1. Vorrichtung zur räumlichen Anordnung und Abstützung von einem Arbeitselement (12) zu bzw. an wenigstens einem Basiselement (14, 14'), umfassend sechs das eine Arbeitselement (12) und das wenigstens eine Basiselement (14, 14') miteinander verbindende Stabelemente (16), deren Enden (18, 18', 18'', 18''', 18'''') jeweils über Kraftübertragungspunkte (20, 20', 20'', 20''', 20'''') an dem zugeordneten einen Arbeitselement (12) und dem zugeordneten wenigstens einen Basiselement (14, 14') abgestützt sind, wobei den sechs Stabelementen (16) wenigstens ein stabförmiges Vorspannelement (22) und/oder ein stabförmiges Versteifungselement (24) zugeordnet ist/sind, das/die zwischen dem einen Arbeitselement (12) und dem wenigstens einen Basiselement (14, 14') eine Vorspannung und/oder eine Aussteifung erzeugt/erzeugen.

2. Vorrichtung nach Anspruch 1, **dadurch gekennzeichnet, dass** das wenigstens eine stabförmige Vorspannelement (22) in sämtlichen Stellungen des einen Arbeitselementes (12) und des wenigstens einen Basiselementes (14, 14') relativ zueinander vorspannend wirkt.

3. Vorrichtung nach Anspruch 1 oder 2, **dadurch gekennzeichnet, dass** das wenigstens eine stabförmige Vorspannelement (22) in mindestens einer Stellung des einen Arbeitselementes (12) und des wenigstens einen Basiselementes (14, 14') relativ zueinander vorspannend wirkt und in mindestens einer anderen Stellung des einen Arbeitselementes (12) und des wenigstens einen Basiselementes (14, 14') relativ zueinander aussteifend wirkt.

4. Vorrichtung nach einem der Ansprüche 1 bis 3, **dadurch gekennzeichnet, dass** das wenigstens eine stabförmige Versteifungselement (24) in sämtlichen Stellungen des einen Arbeitselementes (12) und des wenigstens einen Basiselementes (14, 14') relativ zueinander aussteifend wirkt.

5. Vorrichtung nach einem der Ansprüche 1 bis 4, **dadurch gekennzeichnet, dass** das wenigstens eine stabförmige Versteifungselement (24) in mindestens einer Stellung des einen Arbeitselementes (12) und des wenigstens einen Basiselementes (14, 14') relativ zueinander aussteifend und in mindestens einer anderen Stellung des einen Arbeitselementes (12) und des wenigstens einen Basiselementes (14, 14') relativ zueinander vorspannend wirkt.

6. Vorrichtung nach einem der Ansprüche 1 bis 5, **dadurch gekennzeichnet, dass** wenigstens ein Stabelement (16) und/oder das wenigstens eine stabförmige Vorspannelement (22) und/oder das wenigstens eine stabförmige Versteifungselement (24) teleskopartig längenverstellbar ist/sind, wobei dessen/deren Enden (18, 18', 18'', 18''', 18'''') über die Kraftübertragungspunkte (20, 20', 20'', 20''', 20'''') unmittelbar an dem Arbeitselement (12) und/oder unmittelbar an dem zugeordneten wenigstens einen Basiselement (14, 14') und/oder an einem anderen Stabelement (16) und/oder an dem wenigstens einen stabförmigen Vorspannelement (22) und/oder an dem wenigstens einen stabförmigen Versteifungselement (24) abgestützt sind.

7. Vorrichtung nach Anspruch 6, **dadurch gekennzeichnet, dass** das wenigstens eine Stabelement (16) und/oder das wenigstens eine stabförmige Vorspannelement (22) und/oder das wenigstens eine stabförmige Versteifungselement (24) durch aktive Steuerung oder Regelung teleskopartig längenverstellbar ist/sind.

8. Vorrichtung nach einem der Ansprüche 1 bis 7, **dadurch gekennzeichnet, dass** wenigstens ein Stabelement (16) und/oder das wenigstens eine stabförmige Vorspannelement (22) und/oder das wenigstens eine stabförmige Versteifungselement (24) konstante Länge aufweist/aufweisen, wobei mindestens ein Ende (18, 18', 18'', 18''') des wenigstens einen Stabelementes (16) und/oder des wenigstens einen stabförmigen Vorspannelementes (22) und/oder des wenigstens einen stabförmigen Versteifungselementes (24) über einen Kraftübertragungspunkt (20, 20', 20'', 20''') unter Zwischenanordnung eines Längeneinstellungselementes an dem Arbeitselement (12) und/oder dem zugeordneten wenigstens einen Basiselement (14, 14') abgestützt ist.

9. Vorrichtung nach Anspruch 8, **dadurch gekennzeichnet, dass** das wenigstens eine Basiselement (14, 14') gegenüber dem Arbeitselement (12) relativ in einer Ebene linear bewegbar ist.

10. Vorrichtung nach einem der Ansprüche 1 bis 9, **dadurch gekennzeichnet, dass** die Kraftübertragungspunkte (20, 20', 20'', 20''') als Drehachse, Kugelgelenk, Kardangelenk mit oder ohne Drehscheibe oder dergleichen Drehelement, oder Kulissenführungselement ausgebildet sind.

11. Vorrichtung nach einem der Ansprüche 1 bis 10, **dadurch gekennzeichnet, dass** wenigstens ein Kraftübertragungspunkt (20'''') aktiv steuer- und/oder regelbar ausgebildet ist.

12. Vorrichtung nach einem der Ansprüche 1 bis 11, **dadurch gekennzeichnet, dass** wenigstens ein Kraftübertragungspunkt (20'''') als Servomotor (30), High-Torque-Motor, Hydraulikdrehmotor oder dergleichen Bewegungsenrichtung ausgebildet ist.

13. Vorrichtung nach einem der Ansprüche 1 bis 12, **dadurch gekennzeichnet, dass** die Kraftübertragungspunkte (20, 20', 20'', 20''', 20'''') jeweils an dem zugeordneten Arbeitselement (12) und/oder dem zugeordneten wenigstens einen Basiselement (14, 14') in einer Ebene angeordnet sind.

14. Vorrichtung nach einem der Ansprüche 1 bis 13, **dadurch gekennzeichnet, dass** die Kraftübertragungspunkte (20, 20', 20'', 20''', 20'''') jeweils an dem zugeordneten Arbeitselement (12) und/oder dem zugeordneten wenigstens einem Basiselement (14, 14') in verschiedenen Ebenen angeordnet sind.

15. Vorrichtung nach einem der Ansprüche 1 bis 14, **dadurch gekennzeichnet, dass** das wenigstens eine Stabelement (16) und/oder das wenigstens eine stabförmige Vorspannelement (22) und/oder das wenigstens eine stabförmige Versteifungselement (24) und/oder das Längeneinstellungselement hydraulisch, pneumatisch, mechanisch oder elektrisch längenverstellbar ist.

16. Vorrichtung nach Anspruch 15, **dadurch gekennzeichnet, dass** das wenigstens eine Stabelement (16) und/oder das wenigstens eine stabförmige Vorspannelement (22) und/oder das wenigstens eine stabförmige Versteifungselement (24) und/oder das Längeneinstellungselement eine Hydraulikeinheit, Pneumatikeinheit, Lineareinheit, Spindeleinheit oder einen Linearmotor umfasst.

17. Vorrichtung nach einem der Ansprüche 1 bis 16, **dadurch gekennzeichnet, dass** das wenigstens eine Stabelement (16) und/oder das wenigstens eine stabförmige Vorspannelement (22) und/oder das wenigstens eine stabförmige Versteifungselement (24) und/oder das Längeneinstellungselement mit wenigstens einer Steuereinrichtung zu deren Steuerung bzw. Regelung verbunden ist/sind.

18. Vorrichtung nach Anspruch 17, **dadurch gekennzeichnet, dass** das wenigstens eine Stabelement (16) und/oder das wenigstens eine stabförmige Vorspannelement (22) und/oder das wenigstens eine stabförmige Versteifungselement (24) und/oder das Längeneinstellungselement mit der wenigstens einen Steuereinrichtung jeweils individuell oder sämtlich gemeinsam aufeinander abgestimmt einstellbar ist/sind.

19. Vorrichtung nach einem der Ansprüche 1 bis 18, **dadurch gekennzeichnet, dass** das Arbeitselement (12) einen Werkzeugund/oder Werkstückträger zur Aufnahme und lösbaren Halterung eines Werkzeugs und/oder Werkstücks umfasst.

20. Verwendung einer Vorrichtung nach einem der vorhergehenden Ansprüche zur räumlichen Anordnung und Abstützung von einem Arbeitselement (12) zu bzw. an wenigstens einem Basiselement (14, 14') einer Hexapod-Anordnung oder einer Linapod-Anordnung.
